# EUROPÄISCHE PATENTANMELDUNG

(11) **EP 0 679 048 A2**
(43) Veröffentlichungstag der Anmeldung: **25.10.1995**
(21) Anmeldenummer: 95105729.8
(22) Anmeldetag: 18.04.1995
(51) Int. Cl.: H05B 41/29

(54) **Schaltungsanordnung zur Steuerung eines elektronischen Vorschaltgerätes für Leuchtstofflampen**

(30) Priorität: 18.04.1994 DE 4412779
(71) Anmelder: ABB PATENT GmbH, D-68309 Mannheim (DE)
(72) Erfinder: Goldyn, Dirk, D-58454 Witten (DE); Bui, Bang, D-44149 Dortmund (DE)
(74) Vertreter: Rupprecht, Klaus, Dipl.-Ing.

(57) **Zusammenfassung**

Bei einem nach dem Phasenanschnittprinzip arbeitenden elektronischen Dimmer (D), der zur Steuerung eines elektronischen Vorschaltgerätes (EVG) eingesetzt wird, entstehen Überspannungen, die die Schutzbeschaltung des Dimmers und sogar ihn selbst gefährden können. Mit Hilfe eines in den Stromkreis zwischen dem elektronischen Dimmer (D) und dem elektronischen Vorschaltgerät (EVG) eingefügten Brückengleichrichters (GL) gelingt es, am Vorschaltgerät (EVG) entstehende Überspannungen zum Dimmer (D) hin sicher abzublocken.

## Beschreibung

Die Erfindung betrifft eine Schaltungsanordnung nach dem Oberbegriff des Anspruchs 1.

Es existieren bereits elektronische Vorschaltgeräte, die zum Dimmen von Leuchtstofflampen mit einem elektronischen Dimmer steuerbar sind, wobei dieser nach dem Phasenanschnittprinzip arbeitet. Nun gibt es aber auch elektronische Dimmer, die nicht ohne weiteres zur Steuerung eines elektronischen Vorschaltgerätes verwendbar sind, da sie nach dem Phasenabschnittprinzip arbeiten. Beim Phasenabschnitt entstehen am Eingang des elektronischen Vorschaltgerätes Überspannungen, die auf den Ausgang des elektronischen Dimmers zurückwirken und je nach Energieinhalt die Überspannungsschutzbeschaltung des Dimmers oder sogar den Dimmer selbst zerstören können.

Aufgabe der Erfindung ist es, eine Schaltungsanordnung nach dem Oberbegriff des Anspruchs 1 zu schaffen, mit der es gelingt, die von Überspannungen ausgehenden Gefahren für den Dimmer oder seine Schutzbeschaltung zu beseitigen.

Diese Aufgabe wird durch die im Anspruch 1 gekennzeichneten Merkmale gelöst. Zweckmäßige Ausgestaltungen und Weiterbildungen des Erfindungsgegenstandes sind in den Unteransprüchen genannt.

Die beim Phasenabschnitt entstehenden Überspannungen sind systemimmanent, so daß es außerordentlich schwer ist, die von ihnen ausgehende Gefährdung zu beseitigen. Es wurde versuchsweise eine Reihe komplizierter Schaltungen entworfen, mit denen jedoch das Ziel, die Überspannungen unschädlich zu machen, nur unvollkommen erreicht wurde. Um so bedeutsamer ist der Erfolg zu werten, daß es durch Zwischenschalten eines einfachen Brückengleichrichters zwischen den Dimmer einerseits und das elektronische Vorschaltgerät andererseits gelingt, die an letzterem entstehenden Überspannungen erfolgreich abzublocken. Tritt beim Phasenabschnitt durch das Abschalten des Stromes eine Spannung auf, die größer als die momentane Spannung am Dimmerausgang ist, so wird durch die Sperrpolarität der Dioden des Brückengleichrichters ein Entladestrom zum Abbau der Überspannung durch den Dimmer verhindert. Ein ausgangsseitig an einem als sogenannte Grundlast wirkenden Brückengleichrichter angeschlossener Dimmer kann somit universell im Phasenan- oder Phasenabschnittprinzip in Verbindung mit einem elektronischen Vorschaltgerät betrieben werden, ohne daß entstehende Überspannungen eine Gefährdung darstellen.

In weiterer Ausbildung des Erfindungsgegenstandes ist vorgesehen, daß die durch den Brückengleichrichter gebildete Grundlast durch einen parallel zu seinen Wechselspannungseingängen liegenden Kondensator ergänzt ist, wobei sich dieser Kondensator unter bestimmten Bedingungen vorteilhaft auswirkt. Dies gilt insbesondere dann, wenn der Dimmer ein Zweipolgerät ist, also ohne N-Anschluß auskommt, und dementsprechend seine Spannungsversorgung mit Hilfe des durch die Last fließenden Stromes sicherstellen muß. Der Kondensator wirkt in diesem Fall als Wechselstromlast. Weiterhin verhindert der Kondensator im ausgeschalteten Zustand des Dimmers, daß durch den Strom zur Spannungsversorgung des Dimmers das elektronische Vorschaltgerät selbständig zünden kann.

Das elektronische Vorschaltgerät wird durch die an sich nicht angestrebte aber unschädliche Gleichrichterwirkung des Brückengleichrichters entsprechend der Einstellung des Dimmers mit einem pulsierenden Gleichstrom gesteuert. Es kann zweckmäßig sein, im Eingangsstromkreis des elektronischen Vorschaltgerätes eine Filterdrossel zwischenzuschalten.

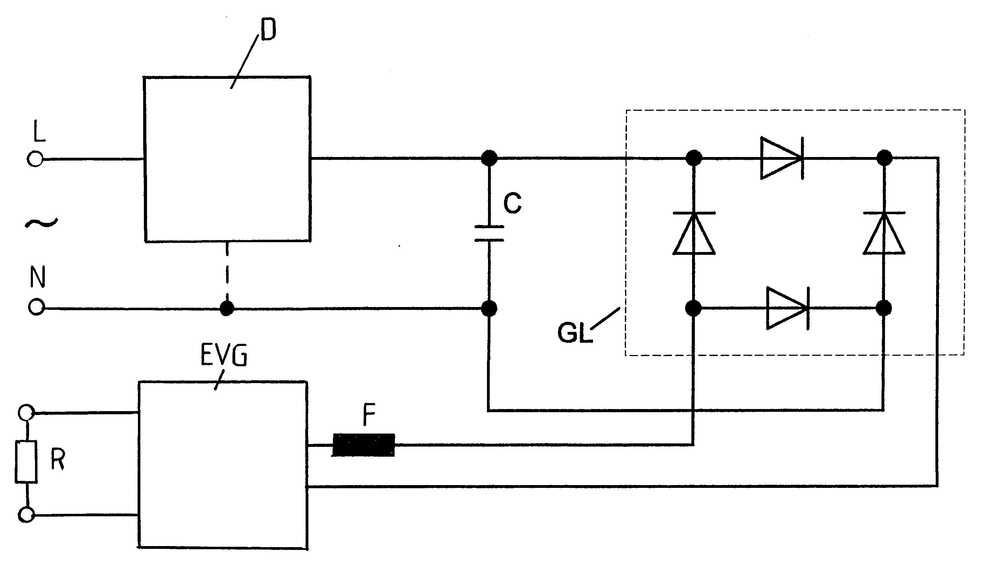

Ein Ausführungsbeispiel der erfindungsgemäßen Schaltungsanordnung ist in der Zeichnung dargestellt und wird im folgenden näher beschrieben.

An einem Netz mit einem Phasenleiter L und einem Nulleiter N ist ein Dimmer D angeschlossen, der zur Minimierung des Verdrahtungsaufwandes als Zweipol ausgeführt ist und seine Stromversorgung mit Hilfe des ihn durchfließenden Laststroms bewerkstelligt. Alternativ kann der Dimmer D selbstverständlich auch als Drei- bzw. Vierpol ausgebildet sein, was in der Zeichnung durch eine gestrichelte Verbindung mit dem Nulleiter N angedeutet ist, wobei dann seine Stromversorgung in konventioneller Weise erfolgen kann.

Der Nulleiter N und der Dimmer D sind ausgangsseitig mit den Wechselspannungseingängen eines Brückengleichrichters GL verbunden, der seinerseits mit seinen Gleichspannungsausgängen am Eingang eines elektronischen Vorschaltgerätes EVG angeschlossen ist. In diesen Stromkreis kann noch eine Filterdrossel F eingefügt sein, und die als Grundlast wirkende Gleichrichterbrücke (GL) kann durch einen Kondensator C ergänzt sein, wobei dieser dann die Wechselspannungseingänge des Brückengleichrichters GL überbrückt.

Am Ausgang des elektronischen Vorschaltgerätes EVG liegt ein Lastwiderstand R, der in der Regel durch in ihrer Helligkeit zu steuernde Leuchtstofflampen gebildet wird. Am Eingang des elektronischen Vorschaltgerätes entstehende Überspannungen, wie sie beim Phasenabschnitt durch das Abschalten des Stroms regelmäßig entstehen, können wegen der Sperrwirkung der Dioden des Brückengleichrichters GL nicht auf den Ausgang des Dimmers D zurückwirken. Eine Zerstörung seiner Überspannungsschutzbeschaltung oder gar des Dimmers selbst ist damit zuverlässig unterbunden.

## Patentansprüche

1. Schaltungsanordnung zur Steuerung eines elektronischen Vorschaltgerätes (EVG) für Leuchtstofflampem (R) mit einem vorgeschalteten elektronischen Dimmer (D), der nach dem Phasenan- oder Phasenabschnittprinzip arbeitet, **dadurch gekennzeichnet,** daß in den Stromkreis zwischen dem elektronischen Dimmer (D) und dem elektronischen Vorschaltgerät (EVG) ein Brückengleichrichter (GL) so eingefügt ist, daß dieser mit einem Wechselspannungseingang am Nulleiter des Wechselspannungsnetzes und mit dem anderen Wechselspannungseingang am Ausgang des Dimmers (D) liegt und seine Gleichspannungsausgänge die Eingänge des Vorschaltgerätes (EVG) bilden.

2. Schaltungsanordnung nach Anspruch 1, dadurch gekennzeichnet, daß die beiden Wechselspannungseingänge des Brückengleichrichters (GL) durch einen Kondensator (C) überbrückt sind.

3. Schaltungsanordnung nach Anspruch 2, dadurch gekennzeichnet, daß der Kondensator (C) in Verbindung mit einem Dimmer (D) für Zweidrahtanschluß, der also keine direkte Verbindung zum Nulleiter besitzt, zum Einsatz gelangt.

4. Schaltungsanordnung nach einem der vorhergehenden Ansprüche, dadurch gekennzeichnet, daß in den Stromkreis zwischen den Brückengleichrichter (GL) und das elektronische Vorschaltgerät (EVG) eine Filterdrossel (F) geschaltet ist.
